(19) **Europäisches Patentamt**

**European Patent Office**

**Office européen des brevets**

(11) **EP 1 036 441 B1**

(12) ## EUROPEAN PATENT SPECIFICATION

(45) Date of publication and mention
of the grant of the patent:
**11.02.2004 Bulletin 2004/07**

(51) Int Cl.[7]: **H04B 11/00**, H04B 13/02

(86) International application number:
**PCT/IL1998/000288**

(21) Application number: **98928506.9**

(22) Date of filing: **18.06.1998**

(87) International publication number:
**WO 1999/029058 (10.06.1999 Gazette 1999/23)**

(54) **METHOD AND APPARATUS FOR CARRYING OUT HIGH DATA RATE UNDERWATER COMMUNICATION**

VERFAHREN UND VORRICHTUNG ZUR DURCHFÜHRUNG VON HOCHGESCHWINDIGKEITSUNTERWASSER-ÜBERTRAGUNG

PROCEDE ET APPAREIL PERMETTANT LA COMMUNICATION SOUS-MARINE A DEBIT BINAIRE ELEVE

(84) Designated Contracting States:
**AT BE CH CY DE DK ES FI FR GB GR IE IT LI LU MC NL PT SE**

(30) Priority: **01.12.1997 IL 12237597**

(43) Date of publication of application:
**20.09.2000 Bulletin 2000/38**

(73) Proprietor: **Underwater Technologies Center Ltd. Tel Aviv 67899 (IL)**

(72) Inventors:
• **SONNENSCHEIN, Menashe**
 **84800 Beer-Sheva (IL)**
• **WULICH, Dov**
 **85025 Metar (IL)**
• **SONNENSCHEIN, Elazar**
 **84810 Beer-Sheva (IL)**

(74) Representative: **Barlow, Roy James et al**
**J.A. KEMP & CO.**
**14, South Square**
**Gray's Inn**
**London WC1R 5JJ (GB)**

(56) References cited:
• **COATELAN ET AL: "Design and test of a coding OFDM system on the shallow water acoustic channel" OCEANS 95 MTS/IEEE CONFERENCE PROCEEDINGS, vol. 3, 9 - 12 October 1995, pages 20765-2070, XP002080999 san diego, CA, US**
• **PATENT ABSTRACTS OF JAPAN vol. 017, no. 661 (E-1471), 7 December 1993 & JP 05 219006 A (NIPPON HOSO KYOKAI), 27 August 1993**
• **LAM ET AL: "A coherent COFDM modulation system for a time-varying frequency-selective underwater acoustic channel" SEVENTH INTERNATIONAL CONFERENCE ON ELECTRONIC ENGINEERING IN OCEANOGRAPHY, 23 - 25 June 1997, pages 198-203, XP002081000 Southampton, UK**
• **PATENT ABSTRACTS OF JAPAN vol. 097, no. 006, 30 June 1997 & JP 09 046314 A (TOSHIBA CORP), 14 February 1997**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**Field of the Invention**

The present invention relates to means for underwater communication. More particularly, the invention relates to a method for carrying out high rate underwater communication, and to an apparatus for carrying out high rate underwater communication according to said method.

**Background of the Invention**

Performing reliable underwater communication is a relatively complicated task. It is known that electromagnetic waves significantly attenuate when propagating through water. The only frequency band that is used for electromagnetic underwater communication is the VLF (Very Low Frequency) range, in the range of up to 10 kHz. In this range, high power transmission is needed, and use of extremely long antennas is required at both the receiving and transmitting ends. Therefore, such use is generally limited to submarine communications, and cannot be exploited for personal use. For shorter range underwater communication, conventional systems use ultrasound acoustic transmission, generally in the frequency range of 20 kHz - 600 kHz. Unfortunately, however, in the acoustic frequency range, the water as a communication medium provides practically only a relatively narrow bandwidth, which limits the speed of the data transfer through water. The ability to reliably transfer data through water with acoustic waves is further problematic, due to the different layers of water density, resulting from non-constant speed of sound in water, multipath propagation of the signal, fading, and other environmental disturbances. Furthermore, it is known that the propagation speed of ultrasonic waves in water is significantly lower than the propagation speed of electromagnetic waves in air. Therefore, when it is desired to communicate in water between two apparatuses, of which at least one is not stationary, or moves at a low speed, the Doppler effects significantly adversely affect the signal and the ability to reliably interpret the transmitted data at the receiving apparatus.

It has been found that many conventional types of electromagnetic air communication techniques are not applicable for overcoming the above problems, which are typical of underwater communications.

Wireless apparatus for carrying out communication in water is known in the art. Such apparatus is used for example in telemetry systems for transferring data that was accumulated during oceanographic researches, or in communication devices for divers. Copending Israeli Patent Application No. 121561, filed on August 18, 1997, by the same applicant herein, discloses an underwater communication apparatus and a communication network for divers. Communication devices for divers are also shown in CA 2,141,619, WO 97/26551, and in US 4,463,452. Other existing apparatus, which is capable of transferring data at a relatively low rate, generally operates in the range of no more than about 600 bits per second, a rate which is in generally sufficient for telemetry purposes, but not for other purposes which require a significantly higher rate of data transfer, such as real time voice or picture transmission. For satisfying these requirements, it is desired to provide an underwater modem which is capable of transferring data at a much higher transfer rate, at least in the range of about 4800 bits per second to 9600 bits per second. Coatelan et Al., *"design and test coding OFDM system on the shallow water acoustic channel*", OCEAN 95 MTS/IEEE, Conference Proceedings, Vol. 3, 9-12 October 1995, pages 2065- 2070, discloses an FSK OFDM scheme for carrying out high data rate underwater communication. Lam et al. "A coherent COFDM modulation system for a time varying frequency selective underwater acoustic channel", Seventh International Conference on Electronic Engineering in Oceanography, 23-25 June 1997, pages 198-203, Southhampton, UK, discloses a coherent OFDM scheme for carrying out high data rate underwater communication.

This document more precisely discloses an underwater modulator-demodulator comprising :

- a transmitting section comprising:

  - data source means, comprising digital data to be transmitted through water;
  - serial-to-parallel data processing means;
  - n-channel OFDM modulator means, for receiving data from said n parallel channels and for modulating the same with n pairs of ultrasonic carriers; and
  - hydrophone means, for receiving said modulated signal from said n channel modulator, and for transmitting same into water; and

- a receiving section comprising:

  - hydrophone means, for receiving a modulated signal from the water, and for conveying the same into an RF circuit;

- RF circuitry, for amplifying and shaping the received modulated signal, and for conveying the same into serial-to-parallel means;
- serial-to-parallel means, for receiving shapes data from the RF circuit, and for splitting the same into n parallel channels;
- n-channel OFDM demodulator means, comprising n pairs of orthogonal ultrasonic sines for demodulating the shaped signal conveyed to the n-channel OFDM demodulator from the RF circuit, and for outputting n channels of digital data; and
- parallel-to-serial means for receiving n parallel channels of outputted data from the n-channel differential decoder, and for combining the data into serial data.

Moreover, existing apparatus enables underwater communication between two locations being at a relatively close range, generally in the range of less than 150 meters, and require a direct "line of sight" between the transmitting and receiving devices. Such apparatus does not provide means for carrying out reliable underwater communication between two sites that may be located several kilometers away from one another, and between there is no "line of sight".

It is an object of the invention to provide a modem which can reliably transfer and receive data at a high rate through water. The term "underwater modem" or simply "modem", when used herein, refers to an apparatus which is capable of transmitting and receiving high-rate data through water, unless otherwise specifically stated. By "high-rate" data transmission it is meant to indicate a band rate of at least 1200 bps, and preferably of at least 4800 bps.

It is still another purpose of the invention to provide an underwater modem which can efficiently overcome fading, multipath, Doppler and environmental effects.

It is still another purpose of the invention to provide an underwater modem which can further overcome Doppler distortions of the transmitted signal due to movement of the transmitting modem, the receiving modem, or both.

It is still another object of the invention to provide a modem comprising means for correcting errors.

Other purposes and advantages of the invention will become apparent as the description proceeds.

## Summary of the Invention

It has been found by the inventors that the fading and multipath problems which significantly affect underwater acoustic communications, resemble the fading and multipath which affect HF (High Frequency, short wave) radio communication. One method, originally developed for overcoming the problems of fading and multipath in HF communication is the Orthogonal Frequency Division Multiplexing (OFDM). However, the OFDM communication method has not yet been developed for underwater communication.

OFDM has been found by the applicants to be the best modulation method for overcoming fading and multipath problems underwater. However, the use of OFDM in itself is not sufficient for solving all the aforesaid problems of underwater communication, and additional means should be provided in order to overcome the Doppler effect, to ensure communications even when a line of sight between the transmitting and receiving apparatuses does not exist, and to assure a reliable (free of errors) communication. The Doppler effect is much more severe in underwater acoustic communications than in electromagnetic air communications, as acoustic waves propagate in water at a speed of about 1500m/sec, while electromagnetic waves propagate at the speed of light, i.e., 300,000km/sec in air. Furthermore, the propagation speed in water is not constant and significantly depends on the depth, the water temperature, and other factors. The modem according to one embodiment of the invention provides means for overcoming the fading and multipath problems, as well as the signal distortions due to the Doppler effects. As will be shown hereinafter, the modem according to the invention can reliably transfer data at a rate much higher than the transfer rate of any prior art underwater communication apparatus.

The underwater modulator-demodulator (modem) apparatus of the invention for transmitting and receiving data at a high rate through water, is defined by claim 1.

Preferably, the receiving section and the transmitting section are contained within the same case, and the transmitting hydrophone and the receiving hydrophone are incorporated within a same hydrophone, and more preferably, the hydrophone is a multidirectional hydrophone. However, in some applications the receiving section and the transmitting section may be contained within separate cases.

According to one embodiment of the invention, the transmitting section further comprises an *n*-channel differential encoder for receiving data from the serial-to-parallel means, for differentially encoding the data on each one of said *n* channels, and for providing the differentially encoded data to the *n*-channel OFDM modulator, and the receiving section further comprises an *n*-channel differential decoder for receiving *n* channels of demodulated data from the demodulator, and for differentially decoding said demodulated data.

Preferably, the transmitting section further comprises a Forward Error Correcting (FEC) device for encoding the digital data to be transmitted, and for decoding the same by at least one error correcting code, and for outputting the same to the parallel-to-serial device of the receiving section.

The modem uses OFDM modulation so the frequency adjusting device compensates for Doppler effects by changing the frequency of each one of the $n$ pairs of orthogonal sines of the OFDM demodulator by the same measured deviation.

Preferably, at least the $n$-channel OFDM modulator at the transmitting section and the demodulator at the receiving section comprises a DSP, incorporated within an integrated circuit.

The invention further relates to a method as defined by claim 9.

Preferably, the said method performs better when a multidirectional hydrophone is used at the transmitting and at the receiving ends. Optionally, each end may be capable of performing bi-directional communication, and if so, one hydrophone may be used for both receiving and transmitting.

Still more preferably, the duration of each symbol includes a guard time and said guard time is used for symbol synchronization at the receiving end.

## Brief Description of the Drawings

Fig. 1 illustrates in block diagram form the structure of a modem according to a preferred embodiment of the invention;

Fig. 2 illustrates in block diagram form the structure of the transmitting section of a modem according to a preferred embodiment of the invention;

Fig. 3 shows the symbol constellation map of a modem according to a preferred embodiment of the invention;

Fig. 4 illustrates in block diagram form the structure of the encoder in the transmitting section of the device according to a preferred embodiment of the invention;

Fig. 5 illustrates in block diagram form the structure of the OFDM modulator in the transmitting section of the modem according to a preferred embodiment of the invention;

Fig. 6 illustrates in block diagram form the structure of the receiving section 3 of the modem according to a preferred embodiment of the invention;

Fig. 7 illustrates in block diagram form the structure of the DFT (Discrete Fourier Transformer) block of the transmitting section of a modem according to a preferred embodiment of the invention;

Figs. 8a, 8b, and Fig. 9 illustrate the symbol decision algorithm at the receiving section of a modem according to a preferred embodiment of the invention;

Fig. 10 illustrates in block diagram form the structure of the symbol synchronizer at the receiving section of a modem according to a preferred embodiment of the invention;

Fig. 11 is a timing diagram illustrating the operation of the symbol synchronizer of Fig. 10.

Fig. 12 illustrates the operation of the average power block of the symbol synchronizer of Fig. 10; and

Fig. 13 is an example of a spectrum diagram showing the band spectrum of a modem according to a preferred embodiment of the invention.

## Detailed Description of Preferred Embodiments

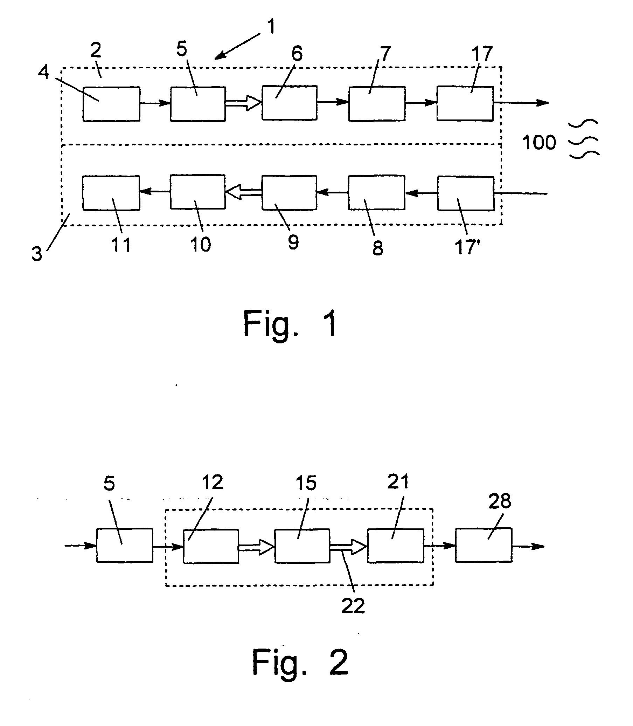

Fig. 1 schematically shows in block diagram form an underwater modem according to a preferred embodiment of the invention. Conveniently, the modem 1 comprises both a transmitting section 2 and a receiving section 3. While the existence of said two sections in each modem is necessary in order to carry out a reliable bi-directional communication, there may be cases in which a communication may be carried out according to the invention between two apparatuses, a first one comprising only a transmitting section 2, and a second comprising only a receiving section 3. Hereinafter, if not specifically stated otherwise, it will be assumed for the purpose of this description that each modem comprises both a transmitting and a receiving section.

The data source 4 of the transmitting section 2 represents data of any kind, in digital form, that must be transmitted by the wireless modem through water to a receiving modem located underwater in another location. The data from the data source (hereinafter also referred to as "the original data") is provided into an FEC (Forward Error Correction) encoder 5, which combines with it additional bits for error correction, in order to provide to the receiving modem the capability of correcting errors which occur due to disturbances in the underwater medium, and for recovering the original data as generated by the data source. The FEC encoder 5 is conventional in its structure, applying any type of error correction method known in the art. From the FEC encoder, data combining the original data and additional bits (hereinafter generally referred to as "the encoded data") is conveyed to an OFDM modulator 6, which modulates the digital data by a plurality of low frequency carriers. The modulated signal is then provided to an RF circuit 7, which translates the frequency of the modulated signal to the band of signal ultrasonic frequencies, amplifies it, and transmits it by means of a hydrophone 17 through the underwater medium 100.

The receiving section 3 receives modulated ultrasonic data from the underwater medium 100 by means of hydrophone 17', which is then provided to an input RF circuit 8, which amplifies it, and translates it down the low frequency range. From the output of the input RF circuit 8, the signal is conveyed to an OFDM demodulator 9, which demodulates the signal, and outputs encoded data. The encoded data from the OFDM demodulator is conveyed into an FEC (Forward Error Correction) decoder 10. The FEC decoder 10 performs a process reversed to the process of the FEC encoder in the transmitting modem. The FEC decoder 10 recovers the original data to be forwarded, as conveyed by the data source 4 to the FEC encoder 5 of the transmitting modem. The FEC decoder 10 contains means for analyzing the encoded data, and if it finds that the data has been corrupted, for example, when passing through the underwater channel, it uses the additional bits added by the FEC encoder 5 to correct errors and recover the original data The FEC decoder 10, similar to the FEC encoder 5, is also conventional in its structure, and is capable of recovering errors only to some extent.

When discussing binary systems, it is common to refer to bits, as two signal levels are possible, e.g., ±A. In OFDM, which applies the M-ary technique, there exist more than two signal possibilities, and it is common to refer to each possible transmitted signal as a "symbol".

The symbol duration is defined as the sum of the essential duration T plus the guard time $\Delta T$. First, the essential duration T of the symbol and the bandwidth B of one modulated carrier of the transmitted signal has to be chosen in order to accomplish frequency nonselective (flat) and slow fading. The two requirements for achieving a flat and slow fading are:

$$(1).\ B << \frac{1}{T_d}\ ;\ \text{and}\ (2).\ T << \frac{1}{\Delta f}$$

wherein $B$ is the bandwidth of the transmitted signal, $T_d$ denotes the delay time of the channel, $T$ is the duration of each transmitted symbol, and $\Delta f$ denotes the Doppler spread.

Assuming that $T = 1/B$, the following conditions should be met:

$$(3).\ T_d << T << \frac{1}{\Delta f}$$

If it can be assumed that $T_{d\ max}$ = 2msec and $1/\Delta f_{\ max}$ = 100msec, the selected symbol duration $T$ should be in the range of:

$$(4).\ 2\text{msec} << T << 100\text{msec}$$

If a symbol duration of $T = 10 \div 20$ms, which is within this range, is used and fulfills this requirement, then this means that the bandwidth of one modulated carrier is $B = 50$Hz ÷ 100 Hz. It has been found that by using OFDM, it is possible to fulfill requirement (4) and efficiently use a wide spectrum bandwidth (3 kHz, for example). In such a case, the number of carriers $N$ should approximately be:

$$N = BW \cdot T$$

wherein $BW$ denotes the total bandwidth available to the whole OFDM signal.

The applicants, have found that for BW=3kHz, number of carriers = 31, and SNR=10dB, and for a desired BER=$10^{-3}$, a maximal bit rate of 3000 bps can be achieved in accordance with DQPSK modulation, and with, for example (31,16,7) forward error correcting BCH code. According to a preferred embodiment of the invention, which is given herein as an example, 31 carriers are used, although, of course, different numbers of carriers may be applied. Moreover, it was found that if the number of carriers increases, the maximal bit rate also increases. For example, a bit rate of 9600 bps may be obtained for about 100 carriers.

As said, the Doppler effect becomes a very serious problem in underwater acoustic communications. A frequency shift of as much as 20Hz is quite normal in such communications. In order to overcome such a severe shift, and in order to keep the receiving section of the modem tuned to the frequency of the received signal, two additional unmodulated carriers, referred to hereinafter as "pilots", are transmitted along with the information bearing signal, that, as said, comprises said 31 modulated carriers. The frequency of the first pilot is selected to be slightly below the lowest frequency modulated carrier, and the second pilot above the highest frequency modulated carrier.

A more detailed block diagram of the OFDM modulator 6 of the transmitting section 2 of the modem, according to this particular preferred embodiment of the invention, is shown in Fig. 2. As use of coherent demodulation is very problematic in underwater applications, due to a very random, rapid, and frequent change in the carrier phase, the modem according to the invention obviates the need for carrier recovery by using differential modulation. More particularly, the data of each of the plurality of carriers of the OFDM is modulated by a DQPSK (Differential Quadrature Phase Shift Key) modulation.

As shown, a serial (original) data is inputted into the FEC encoder 5, which combines to it additional bits for enabling error correction at the receiving modem. From the FEC encoder 5, the data in serial form is conveyed to a serial to parallel device 12, essentially a shift register, which divides each section of 62 bits of serial data (hereinafter, each such 62-bit section will also be referred to as a "word") into 31 two-bit symbols of data to be processed in parallel. It should be noted here that, in order to improve reliability, and to provide better error correction, the bits allocation from a word to symbols is not sequential, but is combined from one bit taken from the first half of a 62-bit word, and a second bit taken from the second half of the same word. A vector of one 62-bits word, its bits allocation to 31 symbols, and the symbols allocation to separate carriers of the OFDM modulator, is shown below:

Vector of input bits assigned to one 62-bit word:

| $b_1$ | $b_2$ | ..... | $b_{30}$ | $b_{31}$ | $b_{32}$ | ..... | $b_{60}$ | $b_{61}$ | $b_{62}$ |
|---|---|---|---|---|---|---|---|---|---|

Bits allocation to symbols and carriers in the modulator:

| carrier number | 1 | 2 | ..... | 30 | 31 |
|---|---|---|---|---|---|
| bits | $b_1$ | $b_2$ | | $b_{30}$ | $b_{31}$ |
| bits | $b_{32}$ | $b_{33}$ | | $b_{61}$ | $b_{62}$ |
| symbols | $[b_1,b_{32}]$ | $[b_2,b_{33}]$ | | $[b_{30},b_{61}]$ | $[b_{31},b_{62}]$ |

Then, all of said 31 symbols of a same data word are parallely conveyed to 31 differential encoders, which perform the following operation:

$$A_k \stackrel{\text{def}}{=} \left[ A_k^{(1)}, A_k^{(2)}, \ldots, A_k^{(N)} \right], \ B_k \stackrel{\text{def}}{=} \left[ B_k^{(1)}, B_k^{(2)}, \ldots, B_k^{(N)} \right]$$

$$B_k^{(n)} = B_{k-1}^{(n)} + A_k^{(n)} \ (\text{mod } L); \ n = 1,2,\ldots, N; \ k = -\infty,\infty.$$

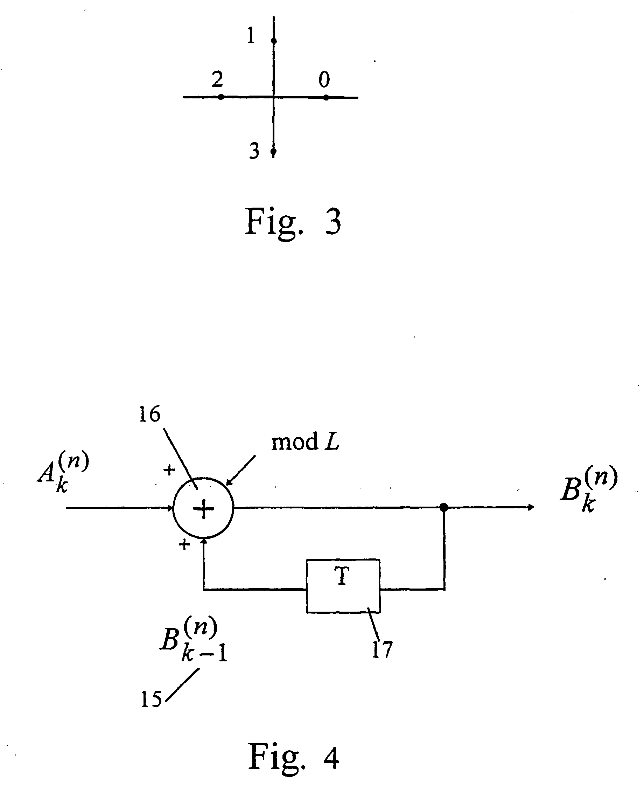

$n$ denotes the carrier number ($n = 1,2,3,4...N$), $L = 4$ are the four possible symbols {0,1,2,3} (assuming each symbol comprises two bits) as defined and shown in the constellation map of Fig. 3. $A_k^{(n)}$ are symbols originated in data source 4, encoded by FEC encoder 5, and separated by the serial to parallel device 12, and $k$ denotes the symbol running index. The structure of each one of the 31 differential encoders is schematically shown in Fig. 4. Block 16 indicates a 1-bit adder, and 17 indicates a delay of $T$ seconds, wherein $T$ is the duration of each symbol.

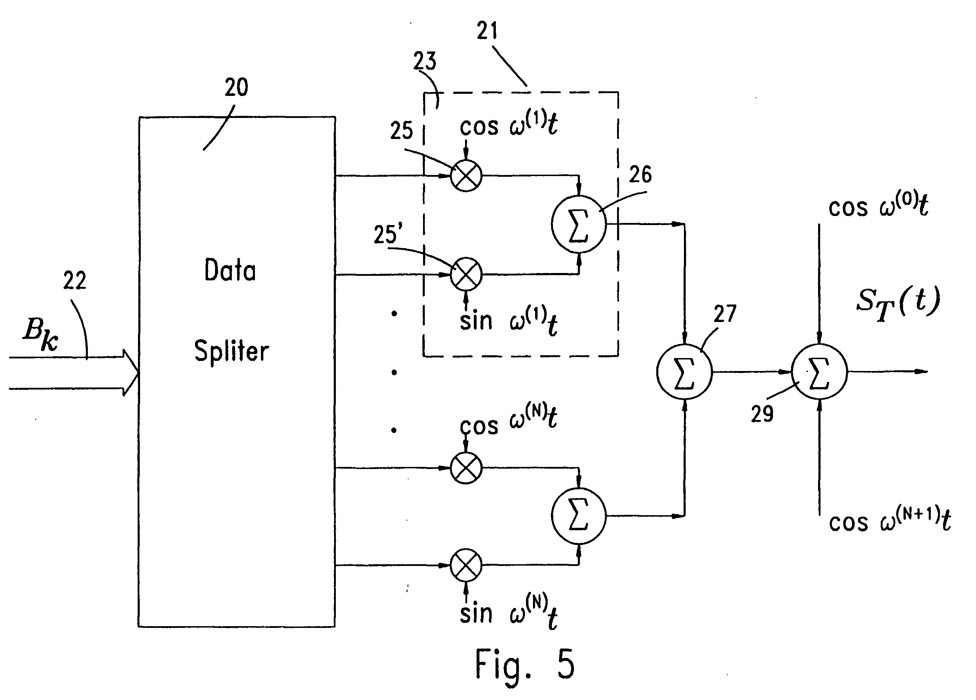

From the said 31 differential encoders 15, encoded symbols $B_k$ are conveyed in 31 parallel lines 22 to a 31-carrier quadrature OFDM modulator unit 21. The structure of the quadrature OFDM modulator is shown in Fig. 5. Data splitter 20 maneuvers the data from each line 22 to a corresponding orthogonal modulator 23. Each modulator comprises two multipliers 25 and 25', the first multiplier 25 multiplying the data by a cosine sub-carrier, and the second, multiplier 25', multiplying it by an orthogonal, sine sub-carrier. Adder 26 adds the result from said two multipliers. A similar modulating process is performed in each one of the other 30 modulators. The results from all 31 modulators are first combined by summing means 27, then combined by adder 29 with two additional sub-carriers (pilots), $\cos\omega^{(0)}t$ and $\cos\omega^{(N+1)}t$, and finally provided to a hydrophone 28, which transmits the combined signal into the water. The purpose of the transmission of said two sub-carriers $\cos\omega^{(0)}t$ and $\cos\omega^{(N+1)}t$ is to help to overcome the frequency shift due to Doppler effects in water, as will become apparent as the description proceeds. Furthermore, it should be noted that, for synchronization purposes at the receiving modem, a guard interval is used. The duration of the guard interval may vary. However, it should preferably be at least in the order of about 10% of the symbol duration $T$.

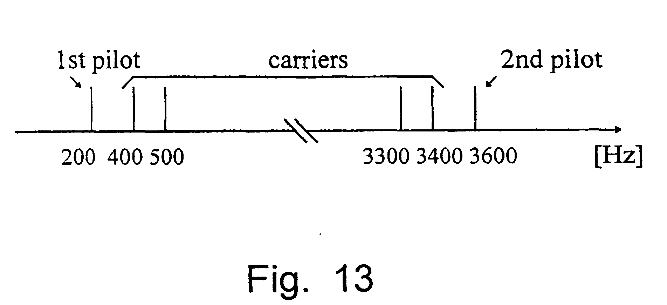

An example of a band spectrum of a modem according to one embodiment of the invention is shown in Fig. 13. As shown, the OFDM transmission is carried out by 31 modulated carriers $\cos\omega^{(1)}t$ - $\cos\omega^{(31)}t$, and two unmodulated carriers (pilots) $\cos\omega^{(0)}t$ and $\cos\omega^{(32)}t$. The frequencies assignments for each one of said carriers according to this example are as follows:

| | | | |
|---|---|---|---|
| $\cos\omega^{(0)}t=200Hz$ | $\cos\omega^{(9)}t=1200Hz$ | $\cos\omega^{(18)}t=2100Hz$ | $\cos\omega^{(27)}t=3000Hz$ |
| $\cos\omega^{(1)}t=400Hz$ | $\cos\omega^{(10)}t=1300Hz$ | $\cos\omega^{(19)}t=2200Hz$ | $\cos\omega^{(28)}t=3100Hz$ |
| $\cos\omega^{(2)}t=500Hz$ | $\cos\omega^{(11)}t=1400Hz$ | $\cos\omega^{(20)}t=2300Hz$ | $\cos\omega^{(29)}t=3200Hz$ |
| $\cos\omega^{(3)}t=600Hz$ | $\cos\omega^{(12)}t=1500Hz$ | $\cos\omega^{(21)}t=2400Hz$ | $\cos\omega^{(30)}t=3300Hz$ |
| $\cos\omega^{(4)}t=700Hz$ | $\cos\omega^{(13)}t=1600Hz$ | $\cos\omega^{(22)}t=2500Hz$ | $\cos\omega^{(31)}t=3400Hz$ |
| $\cos\omega^{(5)}t=800Hz$ | $\cos\omega^{(14)}t=1700Hz$ | $\cos\omega^{(23)}t=2600Hz$ | $\cos\omega^{(32)}t=3600Hz$ |
| $\cos\omega^{(6)}t=900Hz$ | $\cos\omega^{(15)}t=1800Hz$ | $\cos\omega^{(24)}t=2700Hz$ | |
| $\cos\omega^{(7)}t=1000Hz$ | $\cos\omega^{(16)}t=1900Hz$ | $\cos\omega^{(25)}t=2800Hz$ | |
| $\cos\omega^{(8)}t=1100Hz$ | $\cos\omega^{(17)}t=2000Hz$ | $\cos\omega^{(26)}t=2900Hz$ | |

The hydrophone, according to a preferred embodiment of the invention, is a multidirectional hydrophone which can transmit or receive essentially equally to or from all directions. It should be noted here that the use of a multidirectional hydrophone, preferably in accordance with OFDM transmission, has been found to significantly improve the reliability of the transmission, and has been found to best overcome various disturbances in the water, such as noise, multipath, and fading. Moreover, such use has been shown to allow an effective, reliable transmission, even when no line of sight exists between the transmitting and the receiving modems. This is indeed surprising since the prior art emphasizes the use of directional hydrophones in underwater communication.

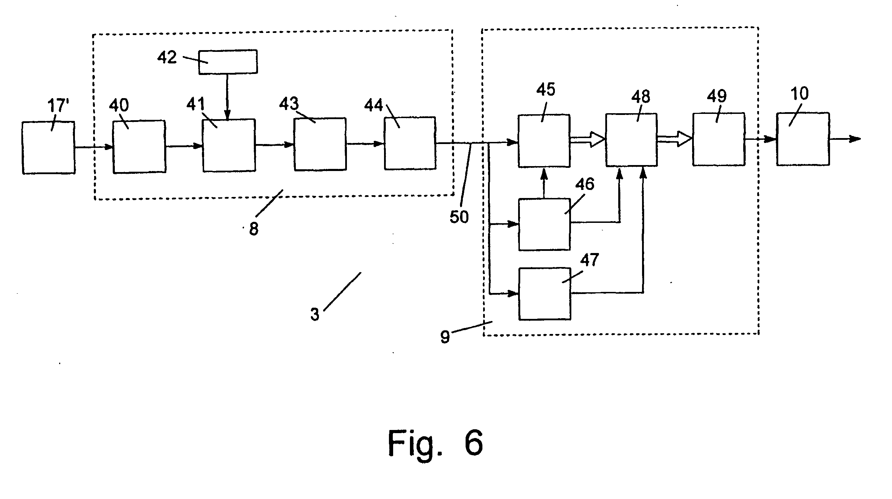

A more detailed schematic block diagram of the receiving section 3 of the modem is shown in Fig. 6. The RF circuit 8 of the receiving section comprises a preamplifier 40, a local oscillator 42 and mixer 41, a band pass filter 43, and an analog to digital converter 44. Data which is received in the hydrophone is first transferred to a preamplifier 40, which amplifies the signal. From the preamplifier, an amplified signal is passed on to a mixer 41. As mentioned hereinbefore, the signal to the mixer spans a bandwidth of 3.5 kHz according to the example given above, and is positioned, for example, between 40.2 kHz and 43.6 kHz. The mixer 41 also receives a frequency of 40 kHz, for example, from the local oscillator, and therefore converts down the bandwidth of the signal to span frequencies of between 200Hz - 3600Hz. Then the signal from the mixer 41 is conveyed to low pass filter 43 and then to an analog to digital (A/D) converter 44, which samples the signal and converts it into a digital representation.

The signal, as said in digital representation, is then provided into the OFDM demodulator 9. The OFDM demodulator 9 comprises a DFT (Discrete Fourier Transformer) 45, a symbol synchronizer 46, a frequency adjust circuit 47, a decision device and differential decoder 48, and a parallel to serial device 49. It should be noted here that the OFDM demodulator 9 is preferably implemented, according to the invention, by one DSP (Digital Signal Processing) circuit, generally available in one integrated chip. However, it may be also implemented by other means well known to those skilled in the art, for example, by a powerful microprocessor. The signal from the A/D converter 44, as said, in digital form, is conveyed in parallel to the DFT 45, to the symbol synchronizer 46, and to the frequency adjust circuit 47. The symbol synchronizer provides to both the DFT 45 and to the decision device and differential decoder 48 a clock indicating the beginning and the end of a received symbol. The frequency adjust circuit 47 inspects the two sub-carriers that are combined with the transmitted signal, for detecting frequency shift, generally due to Doppler effects on the signal propagated in water. The frequency adjust circuit 47 continuously updates the decision device and differential decoder 48 of any frequency shift. The decision device and differential decoder 48, after detecting 31 symbols simultaneously, provides 62 bits representing the symbols in parallel to the parallel to serial device 49, which separates the symbols into bits, which are then combined into two words, and outputted to the FEC decoder 10.

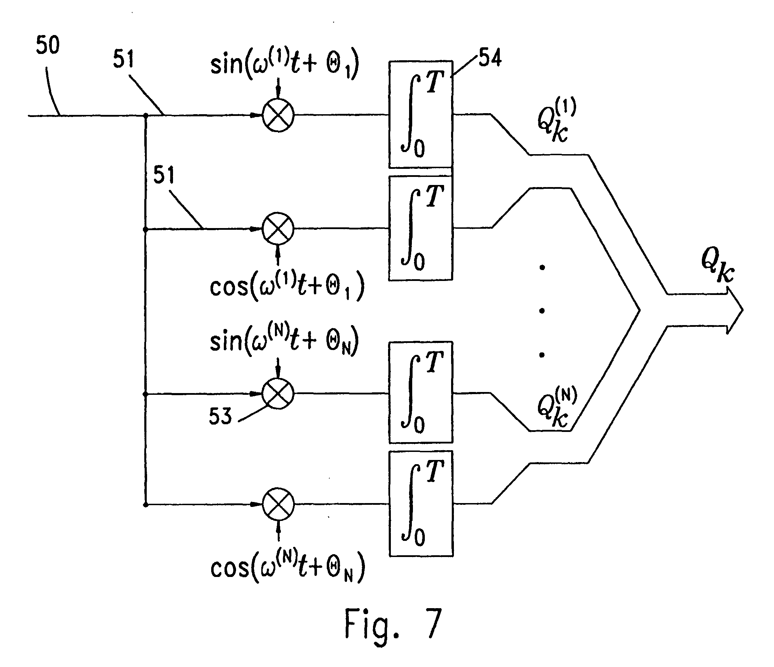

Fig. 7 shows the structure of the DFT 45 in greater detail. The received signal, after being sampled by the A/D, and converted into a digital representation, is conveyed to the DFT on line 50, which is then split into sixty-two parallel lines 51, each one of said parallel lines 51 leading to a corresponding one of sixty-two multipliers 53. The said sixty-two multipliers are divided into thirty-one orthogonal pairs, one multiplier in each pair is provided with a $\sin(\omega^{(n)}t + \theta_x)$, and a second one with a $\cos(\omega^{(n)}t+\theta_x)$, wherein $n$ [$n$ = 1,2,3,...31] indicates the symbol number in a 31-symbol word, and $\theta_x$ indicates a phase which is not phase-synchronized with sine or cosine entries to other multipliers 53 of other pairs. The output from each one of said sixty-two multipliers is then integrated by a corresponding one of sixty-two integrators 54, each of which, as indicated, performs the integration

$$\int_0^T$$

during a period T of a complete symbol, a period which is indicated to the DFT by a clock provided from the symbol synchronizer 46. The two outputs from any pair of integrators produce a complex vector $Q_k^{(n)}$, wherein ($n$ = 1, 2, 3, ... 31=N) indicates the symbol location in the word, and k indicates the symbol index. A vector $Q_k^{(1 \to N)}$, representing all said 31 vectors, is then conveyed into the decision device and differential decoder 48.

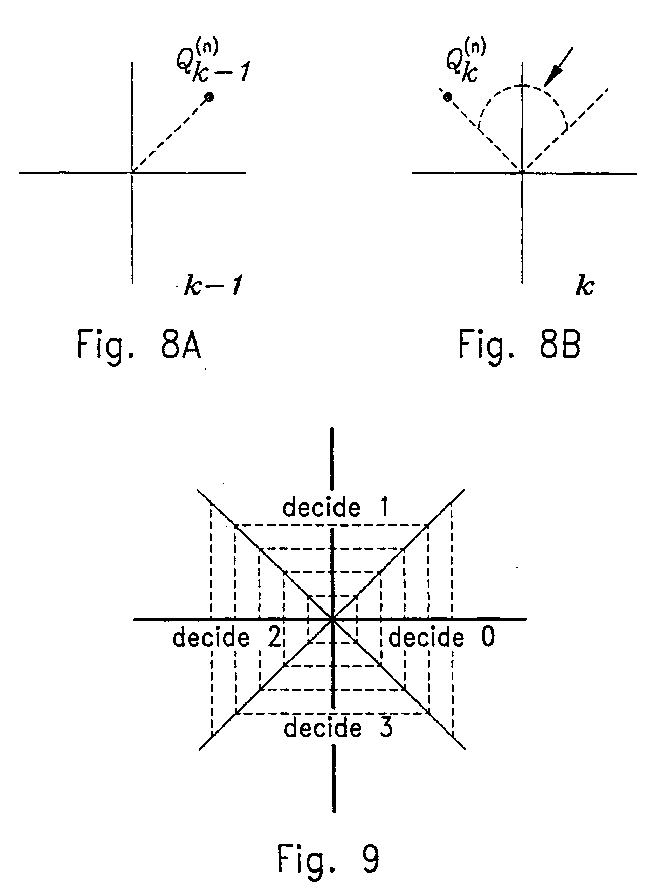

The decision algorithm of the decision device and differential decoder 48 is illustrated in Figs. 8a, 8b, and 9. If the DFT output for carrier number $n$ and symbols $k$-1 and $k$ are vectors $Q_{k-1}^{(n)}$ and $Q_k^{(n)}$ respectively, and $\Delta\varphi_k^{(n)}$ denotes the phase difference between $Q_k^{(n)}$ and $Q_{k-1}^{(n)}$, as shown in Figs. 8a and 8b, the values of $\sin\Delta\varphi_k^{(n)}$ and $\cos\Delta\varphi_k^{(n)}$ are computed to determine a point

$$\left(\sin\Delta\varphi_k^{(n)}, \cos\Delta\varphi_k^{(n)}\right)$$

on the decision plane diagram of Fig. 9, where the decision regions are indicated.

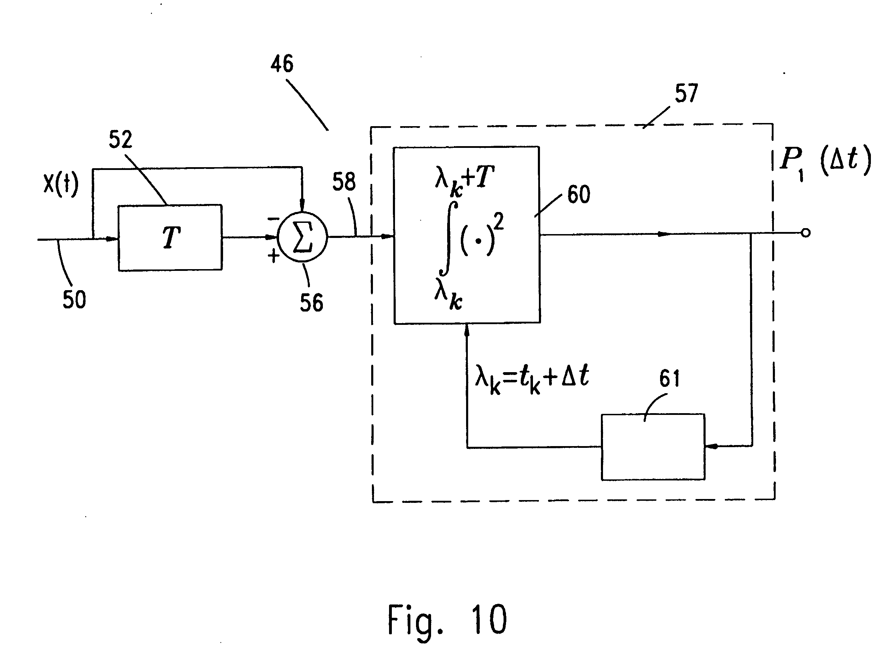

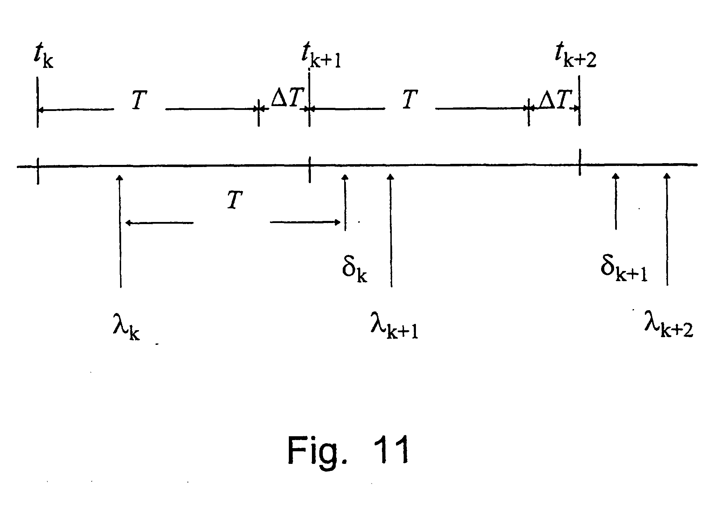

The symbol synchronizer 46 performs a symbol synchronization (often also called "timing recovery"), and its purpose is to recover a clock at the symbol rate (or a multiple thereof) from the input to the DFT at line 50, representing in digital form the input modulated signal. This clock, as hereinbefore noted, determines the boundaries of integration of the DFT 45, and is also provided to the decision device and differential decoder 48 for determining the symbol timing boundaries. Fig. 10 illustrates the structure of the symbol synchronizer 46, and Fig. 11 is a corresponding timing diagram. A received signal $x(t)$ arriving at line 50 is inputted to the synchronizer 46. Signal $x(t)$ is in fact $S_T(t)$ corrupted by noise and distorted by the channel. It contains a modulated symbol of duration $T+\Delta T$. The synchronizer 46 comprises a summing component 56 having two inputs, one input is provided with $x(t)$, and a second input is provided with $x(t)$ delayed by the delay block 52 by a period of $T$ ($T$ is the essential part of the symbol). The output from the summing component 56 is provided by line 58 to the average power block 57, which measures the average power of the signal provided to it, in purpose to find a timing of minimum power. Such search for a minimum-power timing is carried out by varying the beginning of the integration at block 60, and providing the result of the integration into the minimum search block 61. The output of said block 61 is fed back to adjust the beginning of the integration at block 60. Fig. 11 is a timing diagram illustrating the operation of the symbol synchronizer. Assuming that the signal $x(t)$ comprises a digitally modulated signal of symbols of duration $T + \Delta T$, the beginning of the symbols occur at $t_k$, $t_{k+1}$, $t_{k+2}$, etc., and the symbols include the guarding intervals $\Delta T$, as shown. If the processing operation of the symbol synchronizer starts at a random time $\lambda_k = t_k + \Delta t$, wherein $t_k$ is the correct synchronizing time and $\Delta t$ indicates the deviation from said correct synchronizing time, then, for an ideal case, with no noise or disturbances, $P_1$ is zero for $0<\Delta t<\Delta T$. For the real case, however, the synchronizer 46 seeks the case in which $P_1$ is minimal. In Fig. 11, $\lambda_{k+1}$, $\lambda_{k+2}$, ...indicate the timing of the beginning of processing of the DFT receiving $\Delta t$ for synchronization, and $\delta_k$, $\delta_{k+1}$, $\delta_{k+2}$ ... indicate the timing of the end of processing of the DSP. As is clear to those skilled in the art, after a few symbols, the value of $\Delta t$ converge to such value that guaranties minimum of $P_1$.

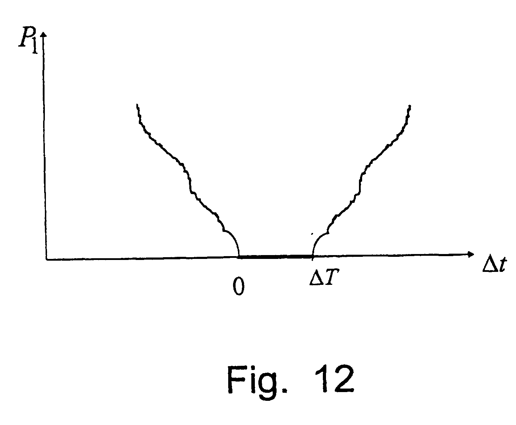

Fig. 12 shows that a minimum power occurs during the guard periods $\Delta T$. $P_1$ reaches its minimal power value if and only if the system is in full symbol synchronization. As said, the symbol synchronizer finds the $(\Delta t)$, for which the power is minimal.

The OFDM signal, when transmitted through the underwater link, may suffer a frequency shift $\Delta F$. A first and general reason for a frequency shift lies in the frequency accuracy of the transmitter and receiver local oscillators. For example, if the accuracy of the local oscillators is 100ppm each, then for an RF frequency of 50kHz, which is the range of frequency used by the modem for communication, a frequency shift of $-5Hz \leq \Delta F \leq 5Hz$ may be expected. Such a frequency shift is generally constant and does not change in time, nor does it depend on the medium of signal propagation. The second reason for the carrier shift, more severe in underwater communication, results from the Doppler effect, particularly due to the movement of either the receiving or the transmitting modem, or both, or due to the change in density of the water. For example, for a relative velocity of 0.5m/sec between the receiving or the transmitting modem, a Doppler frequency shift of about 16Hz is expected.

As mentioned hereinbefore, two pure carriers (pilots), one below the lowest modulated carrier, and one above the highest modulated carrier, are transmitted from the transmitting modem, along with the other $n$ modulated carriers. The frequencies of these pilots are tracked at the frequency adjust circuit 47 by two Phase Locked Loop (PLL) devices, each of which is tuned to one pilot frequency. When a shift is detected in said frequencies, an indicative frequency shift is provided to each plurality of sin$e\omega^{(n)}$ and cos$ine\omega^{(n)}$ components at the DFT. Such shift in frequency therefore realigns the bandwidth of the receiving modem for any frequency shift which may occur to the signal due to Doppler effect or due to propagation effects in the water.

As seen, the invention provides a modem which can reliably transfer data at a high rate through water. The use of OFDM modulation and a multidirectional hydrophone significantly improve the capability and quality of the data transfer, and provide a significant improvement to the efficient range of transmission Furthermore, the modem according to the invention is provided with means for efficiently overcoming severe frequency shifts of the transmitted signal due to Doppler effects. It should be noted here that the use of OFDM is preferable for transferring data through water according to a preferred embodiment of the invention, as this modulation method enables simultaneous transmission of data over plurality of narrow bandwidth channels, wherein each channel is very little prone to amplitude and phase distortions due to its narrow bandwidth.

While some embodiments of the invention have been described by way of illustration, it will be apparent that the invention can be carried into practice with many modifications, variations and adaptations, and with the use of numerous equivalents or alternative solutions that are within the scope of persons skilled in the art, without exceeding the scope of the claims. For example, the number of carriers, as selected above to be, for example, 31, can vary and is a function of the transfer rate and error correcting consideration. In order to achieve a higher data transfer rate, it is preferable to use a greater number of carriers. Of course, as the number of carriers increases, a more complicated FEC has to be used. According to the invention, it can be assumed that a bit rate of up to about 100kbs is practically achievable. Furthermore, although the use of a multidirectional hydrophone is preferable, this is not a limitation, as the modem can also function with a directional hydrophone. The bandwidth, and the frequencies of the plurality of carriers, are also selective and may depend on design considerations. The use of a DSP, as well, is optional, and different alternatives may be used.

## Claims

1. An underwater modulator-demodulator (modem) apparatus for transmitting and receiving data at a rate of at least 1200 bps through water, said modem comprising:

   a. a transmitting section (2) comprising:

   - data source means (4) comprising digital data to be transmitted through water;
   - serial-to-parallel data processing means (12), for splitting a serial data into $n$ parallel channels;
   - an $n$-channel differential encoder (15) for receiving data from the serial-to-parallel data processing means, for differentially encoding the data on each one of said $n$ channels, and for providing the differentially encoded data to an $n$-channel OFDM modulator;
   - $n$-channel OFDM modulator means (21), for receiving data from said $n$ parallel channels and for modulating the same with $n$ pairs of ultrasonic carriers, thereby producing a modulated signal; and
   - hydrophone means (17) for receiving said modulated signal from said $n$ channel modulator means (21), and for transmitting same into water;

   b. a receiving section (3) comprising:

   - hydrophone means (17') for receiving a modulated signal from the water, and for conveying the same into an RF circuit;
   - RF circuitry (8), for amplifying and shaping the received modulated signal, and for conveying the same into serial-to-parallel means;
   - serial-to-parallel means (50) for receiving shaped data from the RF circuit, and for splitting the same into $n$ parallel channels;
   - $n$-channel OFDM demodulator means (9) comprising $n$ pairs of orthogonal ultrasonic sines for demodulating the shaped signal conveyed to the $n$-channel OFDM demodulator from the RF circuit (8), and for outputting $n$ channels of digital data;
   - an $n$-channel differential decoder (48) for receiving $n$ channels of demodulated data from the demodulator, and for differentially decoding said demodulated data;

- parallel-to-serial means (49) for receiving *n* parallel channels of outputted data from the *n*-channel differential decoder (48), and for combining the data into serial data; and

c. means for compensating for Doppler effects on the transmitted signal propagating through water, said means for compensating for Doppler effects comprising, in the modulator (21) of the transmitting section, means for transmitting at least one additional unmodulated carrier having a frequency known at the receiving section, and in the receiving section, a frequency adjusting device (47) for measuring the frequency of said at least one unmodulated carrier, comparing it to the said known frequency, and compensating for any deviation in it.

2. An underwater modulator-demodulator apparatus according to claim 1, wherein the frequency adjusting device compensates for Doppler effects by changing the frequency of each one of said *n* pairs of orthogonal sines of the OFDM demodulator means (9) of the receiving section, by the same measured deviation from the known frequency of the transmitted unmodulated carrier.

3. An underwater modulator-demodulator apparatus according to claim 1 or 2, wherein the transmitting hydrophone means (17) and the receiving hydrophone means (17') are incorporated within a same hydrophone.

4. An underwater modulator-demodulator apparatus according to claims 1, 2 or 3, wherein the hydrophone means (17, 17') is a multidirectional hydrophone.

5. An underwater modulator-demodulator apparatus according to claim 1, wherein the transmitting section further comprises a Forward Error Correcting (FEC) device (5) for receiving the digital data to be transmitted, for encoding the same by at least one error correcting code, and for outputting the same to the serial-to-parallel device of the transmitting section.

6. An underwater modulator-demodulator apparatus according to any one of claims 1 to 5, wherein the receiving section and the transmitting section are contained within the same case.

7. An underwater modulator-demodulator apparatus according to any one of claims 1 to 5, wherein the receiving section and the transmitting section are contained in separate cases.

8. An underwater modulator-demodulator apparatus according to claim 1 wherein at least the *n*-channel OFDM modulator means (21) at the transmitting section and the OFDM demodulator means (9) at the receiving section comprise a DSP, incorporated within an integrated circuit.

9. A method for carrying out a underwater data communication at a rate of at least 1200 bps, comprising performing the following steps:

   (i) transmitting data by:

   a. providing a serial data in digital form to be transmitted;
   b. providing means (12) for splitting the serial data into *n* parallel channels, and assigning symbols to groups of data bits;
   c. differentially encoding the symbols (15) in each of said *n* parallel channels;
   d. modulating (21) said differentially encoded symbols by an *n*-channels OFDM modulation;
   e. transmitting said OFDM modulated data through a hydrophone (17), into the water; and

   (ii) receiving said transmitted data in understandable form, by:

   a. receiving said transmitted OFDM modulated data by a hydrophone (17');
   b. demodulating the received signal by an *n*-channel OFDM demodulator (9);
   c. differentially decoding (48) the demodulated data in said *n* channels; and
   d. converting (49) the encoded data in said n channels from parallel into serial form;

   the method further comprising the steps of:

   transmitting simultaneously with the OFDM modulated data at least one additional unmodulated ultrasonic carrier (pilot); and

when receiving said OFDM modulated data and said at least one additional unmodulated ultrasonic carrier by the hydrophone, measuring the frequency shift of said unmodulated signal from its expected frequency value, and compensating for said shift by adjusting the OFDM demodulator of the receiving section accordingly.

10. A method for carrying out a high data rate underwater communication according to claim 9, wherein the receiving and the transmitting sections are located within the same casing.

11. A method for carrying out a high data rate underwater communication according to claim 10, wherein the hydrophones (17') at the receiving and (17) at the transmitting sections are incorporated within a same hydrophone.

12. A method for carrying out a high-rate underwater communication according to any one of claims 9 to 11, wherein the hydrophone is a multidirectional hydrophone.

13. A method according to claim 9 wherein the duration of each symbol includes a guard time.

14. A method according to claim 13 wherein the guard time is used for symbol synchronization at the receiving end.

15. A method according to claim 14 wherein the symbol synchronization is made by detecting a minimum of the average power in the difference signal within a time period equal to the said guard time, the difference signal being defined as the difference between the received signal and the received signal delayed by a duration of one symbol.

**Patentansprüche**

1. Unterwasser-Modulator-Demodulator(Modem)-Vorrichtung zum Senden und Empfangen von Daten mit einer Übertragungsgeschwindigkeit von zumindest 1200 bps durch Wasser, wobei das Modem Folgendes umfaßt:

a. einen sendenden Abschnitt (2), umfassend

- ein Datenquellenmittel (4), umfassend digitale Daten, die durch Wasser zu senden sind;
- ein Serien-Parallel-Datenverarbeitungsmittel (12) zum Aufspalten von seriellen Daten in n parallele Kanäle;
- einen n-Kanal-Differenzcodierer (15) zum Empfangen von Daten vom Serien-Parallel-Datenverarbeitungsmittel, um eine Differenzcodierung der Daten auf jedem einzelner der n Kanäle vorzunehmen, und um die differenzcodierten Daten einem n-Kanal-OFDM-Modulator bereitzustellen;
- ein OFDM-Modulatormittel (21) zum Empfangen der Daten von den n parallelen Kanälen und zum Modulieren der Daten mit n Paaren von Ultraschallträgem, wodurch ein moduliertes Signal erzeugt wird; und
- ein Hydrophonmittel (17) zum Empfangen des modulierten Signal vom n-Kanal-Modulatormittel (21) und zum Senden der Daten in Wasser;

b. einen empfangenden Abschnitt (3), umfassend

- ein Hydrophonmittel (17') zum Empfangen eines modulierten Signals aus dem Wasser und zum Übertragen des Signals in eine Hochfrequenzschaltung;
- eine Hochfrequenzschaltungsanordnung (8) zum Verstärken und Formen des empfangenen modulierten Signals und zum Übertragen des Signals in ein Serien-Parallel-Mittel;
- ein Serien-Parallel-Mittel (50) zum Empfangen der geformten Daten von der Hochfrequenzschaltung und zum Aufspalten der Daten in n parallele Kanäle;
- ein n-Kanal-OFDM-Demodulatormittel (9), umfassend n Paare von orthogonalen Ultraschallsinussen zum Demodulieren des geformten Signals, das von der Hochfrequenzschaltung (8) zum n-Kanal-OFDM-Demodulator übertragen wurde, und zum Ausgeben von n Kanälen von digitalen Daten;
- einen n-Kanal-Differenzdecodierer (48) zum Empfangen von n Kanälen von demodulierten Daten vom Demodulator und zum Differenzdecodieren der demodulierten Daten;
- ein Parallel-Serien-Mittel (49) zum Empfangen n paralleler Kanäle von ausgegebenen Daten vom n-Kanal-Differenzdecodierer (48) und zum Kombinieren der Daten zu seriellen Daten; und

c. ein Mittel zum Ausgleichen von Doppler-Effekten am gesendeten Signal, welches sich durch Wasser ausbreitet, wobei das Mittel zum Ausgleichen von Doppler-Effekten im Modulator (21) des sendenden Abschnitts ein Mittel zum Senden zumindest eines zusätzlichen unmodulierten Trägers, der eine am empfangenden Abschnitt bekannte Frequenz aufweist, und im empfangenden Abschnitt eine Frequenzeinstellvorrichtung (47) zum Messen der Frequenz des zumindest einen unmodulierten Trägers, zum Vergleichen der Frequenz mit der bekannten Frequenz und zum Ausgleichen jeglicher Abweichung darin umfaßt.

2. Unterwasser-Modulator-Demodulator-Vorrichtung nach Anspruch 1, wobei die Frequenzeinstellvorrichtung Doppler-Effekte durch Verändern der Frequenz eines jeden der n Paare von orthogonalen Sinussen des OFDM-Demodulatormittels (9) des empfangenden Abschnitts um die gleiche gemessene Abweichung von der bekannten Frequenz des gesendeten unmodulierten Trägers ausgleicht.

3. Unterwasser-Modulator-Demodulator-Vorrichtung nach Anspruch 1 oder 2, wobei das sendende Hydrophonmittel (17) und das empfangende Hydrophonmittel (17') innerhalb eines gleichen Hydrophons enthalten sind.

4. Unterwasser-Modulator-Demodulator-Vorrichtung nach Anspruch 1, 2 oder 3, wobei das Hydrophonmittel (17, 17') ein Mehrrichtungs-Hydrophon ist.

5. Unterwasser-Modulator-Demodulator-Vorrichtung nach Anspruch 1, wobei der sendende Abschnitt femer eine Vorwärtsfehlerkorrektur(FEC)-Vorrichtung (5) zum Empfangen der zu übertragenden digitalen Daten, zum Codieren dieser Daten durch zumindest einen Fehlerkorrekturcode und zum Ausgeben der Daten an die Serien-Parallel-Vorrichtung des sendenden Abschnitts umfaßt.

6. Unterwasser-Modulator-Demodulator-Vorrichtung nach einem der Ansprüche 1 bis 5, wobei der empfangende Abschnitt und der sendende Abschnitt im gleichen Gehäuse beinhaltet sind.

7. Unterwasser-Modulator-Demodulator-Vorrichtung nach einem der Ansprüche 1 bis 5, wobei der empfangende Abschnitt und der sendende Abschnitt in gesonderten Gehäusen beinhaltet sind.

8. Unterwasser-Modulator-Demodulator-Vorrichtung nach Anspruch 1, wobei zumindest das n-Kanal-OFDM-Modulatormittel (21) am sendenden Abschnitt und das OFDM-Demodulatormittel (9) am empfangenden Abschnitt einen digitalen Signalprozessor umfassen, der in einer integrierten Schaltung enthalten ist.

9. Verfahren zum Ausführen einer Unterwasserdatenkommunikation mit einer Übertragungsgeschwindigkeit von zumindest 1200 bps, umfassend das Durchführen der folgenden Schritte:

(i) Senden von Daten durch

a. Bereitstellen serieller Daten in digitaler Form, die zu senden sind;
b. Bereitstellen eines Mittels (12) zum Aufspalten der seriellen Daten in n parallele Kanäle und Zuweisen von Symbolen zu Gruppen von Datenbits;
c. Differenzcodieren der Symbole (15) in jedem der n parallelen Kanäle;
d. Modulieren (21) der differenzcodierten Symbole durch eine n-Kanal-OFDM-Modulation;
e. Senden der OFDM-modulierten Daten durch ein Hydrophon (17) in das Wasser; und

(ii) Empfangen der gesendeten Daten in verständlicher Form durch

a. Empfangen der gesendeten OFDM-modulierten Daten durch ein Hydrophon (17');
b. Demodulieren des empfangenden Signals durch einen n-Kanal-OFDM-Demodulator (9);
c. Differenzdecodieren (48) der demodulierten Daten in n Kanäle; und
d. Umwandeln (49) der codierten Daten in den n Kanälen von der parallelen in die serielle Form;

wobei das Verfahren ferner folgende Schritte umfaßt:

Übertragen zumindest eines zusätzlichen unmodulierten Ultraschallträgers (Pilots) gleichzeitig mit den OFDM-modulierten Daten; und

Messen der Frequenzverschiebung des unmodulierten Signals von seinem erwarteten Frequenzwert und Ausgleichen der Verschiebung durch entsprechendes Einstellen des OFDM-Demodutators des empfangenden

EP 1 036 441 B1

Abschnitts, wenn die OFDM-modulierten Daten und der zumindest eine zusätzliche unmodulierte Ultraschallträger durch das Hydrophon empfangen werden.

10. Verfahren zum Ausführen einer Unterwasserkommunikation mit einer hohen Datenübertragungsgeschwindigkeit nach Anspruch 9, wobei der empfangende und der sendende Abschnitt innerhalb des gleichen Gehäuses gelegen sind.

11. Verfahren zum Ausführen einer Unterwasserkommunikation mit einer hohen Datenübertragungsgeschwindigkeit nach Anspruch 10, wobei die Hydrophone (17') am empfangenden Abschnitt und (17) am sendenden Abschnitt innerhalb eines gleichen Hydrophons enthalten sind.

12. Verfahren zum Ausführen einer hochratigen Unterwasserkommunikation nach einem der Ansprüche 9 bis 11, wobei das Hydrophon ein Mehrrichtungs-Hydrophon ist.

13. Verfahren nach Anspruch 9, wobei die Dauer jedes Symbols eine Schutzzeit beinhaltet.

14. Verfahren nach Anspruch 13, wobei die Schutzzeit zur Symbolsynchronisierung am empfangenden Ende benutzt wird.

15. Verfahren nach Anspruch 14, wobei die Symbolsynchronisierung durch Feststellen eines Mindestmaßes der Durchschnittsleistung im Differenzsignal innerhalb eines Zeitraums, welcher der Schutzzeit gleich ist, erfolgt, wobei das Differenzsignal als der Unterschied zwischen dem empfangenden Signal und dem durch eine Dauer von einem Symbol verzögerten empfangenden Signal definiert ist.

**Revendications**

1. Dispositif de modulation-démodulation sous-marin (modem) pour transmettre et recevoir des données à un débit d'au moins 1200 bits par seconde à travers l'eau, ledit modem comportant :

    a. une section de transmission (2) comportant :

    - des moyens de source de données (4) comportant des données numériques à transmettre à travers l'eau,
    - des moyens de traitement de données série-parallèle (12), pour diviser des données série en n canaux parallèles,
    - un codeur différentiel à n canaux (15) pour recevoir des données provenant des moyens de traitement de données série-parallèle, pour coder de manière différentielle les données sur chacun desdits n canaux, et pour délivrer les données codées de manière différentielle à un modulateur à multiplexage par répartition orthogonale de la fréquence (OFDM) à n canaux,
    - des moyens de modulation OFDM à n canaux (21), pour recevoir des données provenant desdits n canaux parallèles et pour moduler celles-ci à l'aide de n paires de porteuses à ultrasons, de manière à produire un signal modulé, et
    - des moyens d'hydrophone (17) pour recevoir ledit signal modulé provenant desdits moyens de modulation à n canaux (21), et pour transmettre celui-ci à travers l'eau,

    b. une section de réception (3) comportant :

    - des moyens d'hydrophone (17') pour recevoir un signal modulé provenant de l'eau, et pour acheminer celui-ci vers un circuit RF,
    - un circuit RF (8) pour amplifier et mettre en forme le signal modulé reçu, et pour acheminer celui-ci vers des moyens série-parallèle,
    - des moyens série-parallèle (50) pour recevoir les données mises en forme provenant du circuit RF, et pour diviser celles-ci en n canaux parallèles,
    - des moyens de démodulation OFDM à n canaux (9) comportant n paires de sinus à ultrasons orthogonaux pour démoduler le signal mis en forme acheminé vers le démodulateur OFDM à n canaux à partir du circuit RF (8), et pour délivrer en sortie n canaux de données numériques,
    - un décodeur différentiel à n canaux (48) pour recevoir n canaux de données démodulées provenant du démodulateur, et pour décoder de manière différentielle lesdites données démodulées,

13

- des moyens parallèle-série (49) pour recevoir n canaux parallèles de données délivrées en sortie provenant du décodeur différentiel à n canaux (48), et pour combiner les données dans des données série, et

c. des moyens pour compenser les effets Doppler sur le signal transmis se propageant à travers l'eau, lesdits moyens destinés à compenser les effets Doppler comportant, dans le modulateur (21) de la section de transmission, des moyens pour transmettre au moins une porteuse non-modulée supplémentaire ayant une fréquence connue à la section de réception, et dans la section de réception, un dispositif d'ajustement de fréquence (47) pour mesurer la fréquence de ladite au moins une porteuse non-modulée, pour la comparer à ladite fréquence connue, et pour compenser tout écart entre elles.

2. Dispositif de modulation-démodulation sous-marin selon la revendication 1, dans lequel le dispositif d'ajustement de fréquence compense les effets Doppler en changeant la fréquence de chacune desdites n paires de sinus orthogonaux des moyens de démodulation OFDM (9) de la section de réception, par le même écart mesuré par rapport à la fréquence connue de la porteuse non-modulée transmise.

3. Dispositif de modulation-démodulation sous-marin selon la revendication 1 ou 2, dans lequel les moyens d'hydrophone de transmission (17) et les moyens d'hydrophone de réception (17') sont incorporés dans un même hydrophone.

4. Dispositif de modulation-démodulation sous-marin selon les revendications 1, 2 ou 3, dans lequel les moyens d'hydrophone (17, 17') sont un hydrophone multidirectionnel.

5. Dispositif de modulation-démodulation sous-marin selon la revendication 1, dans lequel la section de transmission comporte en outre un dispositif de correction d'erreurs sans voie de retour (FEC) (5) pour recevoir les données numériques à transmettre, pour coder celles-ci par l'intermédiaire d'au moins un code de correction d'erreurs, et pour délivrer en sortie celles-ci au dispositif série-parallèle de la section de transmission.

6. Dispositif de modulation-démodulation sous-marin selon l'une quelconque des revendications 1 à 5, dans lequel la section de réception et la section de transmission sont contenues dans le même boîtier.

7. Dispositif de modulation-démodulation sous-marin selon l'une quelconque des revendications 1 à 5, dans lequel la section de réception et la section de transmission sont contenues dans des boîtiers séparés.

8. Dispositif de modulation-démodulation sous-marin selon la revendication 1, dans lequel au moins les moyens de modulation OFDM à n canaux (21) dans la section de transmission et les moyens de démodulation OFDM (9) dans la section de réception comportent un traitement numérique des signaux (DSP), incorporé dans un circuit intégré.

9. Procédé pour effectuer une communication sous-marine de données à un débit d'au moins 1200 bits par seconde, comportant les étapes suivantes consistant à :

(i) transmettre des données en :

a. délivrant des données série sous forme numérique à transmettre,
b. fournissant des moyens (12) pour diviser les données série en n canaux parallèles, et affecter des symboles à des groupes de bits de données,
c. codant de manière différentielle les symboles (15) dans chacun desdits n canaux parallèles,
d. modulant (21) lesdits symboles codés de manière différentielle par l'intermédiaire d'une modulation OFDM à n canaux,
e. transmettant lesdites données modulées OFDM par l'intermédiaire d'un hydrophone (17), dans l'eau, et

(ii) recevoir lesdites données transmises sous forme compréhensible, en :

a. recevant lesdites données modulées OFDM transmises par l'intermédiaire d'un hydrophone (17'),
b. démodulant le signal reçue par l'intermédiaire d'un démodulateur OFDM à n canaux (9),
c. décodant de manière différentielle (48) les données démodulées dans lesdits n canaux, et
d. convertissant (49) les données codées dans lesdits n canaux d'une forme parallèle en une forme série,

le procédé comportant en outre les étapes consistant à :

transmettre simultanément avec les données modulées OFDM au moins une porteuse à ultrasons non-modulée supplémentaire (pilote), et

lors de la réception desdites données modulées OFDM et de ladite au moins une porteuse à ultrasons non-modulée supplémentaire par l'hydrophone, mesurer le décalage de fréquence dudit signal non-module par rapport à sa valeur de fréquence attendue, et compenser ledit décalage en ajustant le démodulateur OFDM de la section de réception en conséquence.

**10.** Procédé pour effectuer une communication sous-marine à débit de données élevé selon la revendication 9, dans lequel les sections de réception et de transmission sont contenues dans le même boîtier.

**11.** Procédé pour effectuer une communication sous-marine à débit de données élevé selon la revendication 10, dans lequel les hydrophones (17') dans la section de réception et (17) dans la section de transmission sont incorporés dans un même hydrophone.

**12.** Procédé pour effectuer une communication sous-marine à débit élevé selon l'une quelconque des revendications 9 à 11, dans lequel l'hydrophone est un hydrophone multidirectionnel.

**13.** Procédé selon la revendication 9, dans lequel la durée de chaque symbole inclut un temps de garde.

**14.** Procédé selon la revendication 13, dans lequel le temps de garde est utilisé pour une synchronisation de symbole à l'extrémité de réception.

**15.** Procédé selon la revendication 14, dans lequel la synchronisation de symbole est effectuée en détectant un minimum de la puissance moyenne du signal de différence dans une période de temps égale audit temps de garde, le signal de différence étant défini en tant que différence entre le signal reçu et le signal reçu retardé d'une durée d'un symbole.

Fig. 1

Fig. 2

Fig. 3

Fig. 4

Fig. 5

Fig. 6

Fig. 7

EP 1 036 441 B1

$Q_{k-1}^{(n)}$

$k-1$

Fig. 8A

$Q_k^{(n)}$

$k$

Fig. 8B

decide 1

decide 2    decide 0

decide 3

Fig. 9

Fig. 10

EP 1 036 441 B1

Fig. 11

Fig. 12

1st pilot          carriers          2nd pilot

200 400 500          3300 3400 3600     [Hz]

Fig. 13